# EUROPEAN PATENT APPLICATION

(11) **EP 3 933 730 A1**
(43) Date of publication of application: **05.01.2022**
(21) Application number: 20183052.8
(22) Date of filing: 30.06.2020
(51) Int. Cl.: G06Q 20/00

(54) **REALTIME SELECTION OF PAYMENT ACCOUNT**

(71) Applicant: Mastercard International Incorporated, Purchase NY 10577 (US)
(72) Inventor: Noë, James Christian, West Wickham, BR4 0BL (GB); LAMBERT, Jorn, London, NW8 9PG (GB); COWEN, Michael John, London, W2 3DW (GB)
(74) Representative: Gill Jennings & Every LLP

(57) **Abstract**

The invention provides a method and system allowing a consumer to update (secondary) payment credentials linked to a single set of main (first) payment credentials. This allows consumers to initiate transactions using such first set of payment credentials, which are treated by the merchant and acquirer as the payment credentials for the transaction, while the transaction is funded using payment credentials that the consumer dynamically selected. The selection may be performed before the transaction begins, or in some cases the selection can be made in real time whilst the transaction is ongoing.

## Description

### FIELD OF INVENTION

The invention relates generally to the selection of a payment account either prior to or in real time during a transaction, and more particularly to the replacement of a payment account identified at a point of sale with a preferred payment account whilst a transaction is ongoing.

### BACKGROUND

There is an increasing demand for consumers to be able to link multiple funding sources with a single payment card or payment token, whereby the consumer can select which funding account they wish to use for a given transaction either before or during the transaction.

This has the benefit of allowing consumers to reduce the number of payment cards they need to carry with them or store in a wallet (digital or physical), may allow them to collect rewards where otherwise they wouldn't, may allow them to benefit from preferential exchange rates, and also allows consumers to fund a purchase using a funding account that may otherwise not be accepted by a given merchant.

As the payment card or payment token is provided by a single primary issuer, having multiple funding sources associated with the payment card or payment token additionally provides a way to link transactions funded by different issuers, thereby enabling information from such transactions to be collated by the primary issuer.

However, implementing such a payment mechanism is challenging and creates technical problems of how to provide a secure indication of the funding account in a way that is compatible with existing systems, and how to identify this funding account in real time during the transaction without introducing a significant delay.

Additional technical problems arise in authenticating and verifying such payments, as the cryptogram associated with the payment card or payment token may be different to the cryptogram associated with the funding account.

### SUMMARY OF THE INVENTION

The invention provides a method and system allowing a consumer to update (secondary) payment credentials linked to a single set of main (first) payment credentials. This allows consumers to initiate transactions using such first set of payment credentials, which are treated by the merchant and acquirer as the payment credentials for the transaction, while the transaction is funded using payment credentials that the consumer dynamically selected. The selection may be performed before the transaction begins, or in some cases the selection can be made in real time whilst the transaction is ongoing. In some implementations, it may be possible to perform the selection after the transaction is completed.

In a first aspect, the invention provides a computer-implemented method for processing a transaction, the method performed by a data processing system, the method comprising: receiving an indication of a preferred unique identifier to be used in preference to a first unique identifier when processing an authorization request; receiving, from a server of an acquirer, an authorization request comprising either the first unique identifier or a tokenized identifier associated with the first unique identifier; and processing the authorization request based on the preferred unique identifier.

Preferred features of this aspect are set out in the appended dependent claims.

In a second aspect, the invention provides one or more processors in a payment network configured to perform the method of the first aspect.

In a third aspect, the invention provides a computer-readable medium having instructions stored thereon which, when executed by one or more payment network processors, cause the one or more processors to perform the method of the first aspect.

### BRIEF DESCRIPTION OF THE DRAWINGS

Embodiments of the present invention are described below, by way of example only, with reference to the accompanying drawings, in which:
Figure 1 illustrates in schematic form a system suitable for implementing aspects of the invention;
Figures 2A and 2B schematically illustrate the exchange of data between various entities in an embodiment of the present invention;
Figure 3 illustrates a data structure used in the credential selection database in an embodiment of the present invention;
Figures 4A and 4B schematically illustrate the exchange of data between various entities in another embodiment of the present invention;
Figure 5 illustrates another data structure used in the credential selection database in another embodiment of the present invention;
Figure 6 illustrates another data structure used in the credential selection database in another embodiment of the present invention;
Figure 7 is a flow diagram setting out a method of performing a payment transaction according to the present invention;
Figure 8 is a flow diagram setting out a method of initiating a payment transaction performed by a communication device according to the present invention; and
Figure 9 shows in schematic form a data processing device that is suitable for performing the functions of components of the system shown in Figure 1.

### DETAILED DESCRIPTION

In the following description aspects of the invention are described in the context of electronic payments. It will be appreciated however that the invention has application in contexts outside of electronic payments, specifically to any environment in which an authentication credential is linked to one or more further authentication credentials that may be managed by a consumer, perhaps in real time as a transaction is ongoing.

The present invention provides methods and systems for allowing a consumer to make dynamic selections of a number of different authorization credentials linked to a main payment credential. In some embodiments, the main payment credential is the primary account number (main PAN) of a payment card, such as a debit card, credit card or prepaid card. A number of other payment credentials (preferred PANs or PPANs) are linked to the main payment credential in a credential selection database that is maintained by a data processing system such as a server of a payment processing network. Before initiating a transaction at a merchant point of sale terminal, a consumer uses a software application to register a selection to indicate that of one of the linked payment credentials should be used in preference to the main payment credential for a transaction initiated using the main payment credential. Upon receiving a transaction authorization request comprising the main PAN, the data processing system determines the selected payment credential should be used in preference to the main payment credential. During processing of the transaction, the authorization request message is updated to include the selected payment credential and thereafter processed as a transaction that was initiated using the selected payment credential.

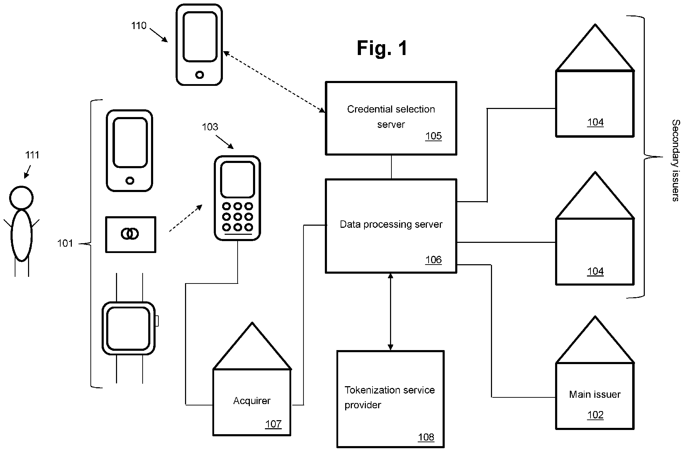

Figure 1 shows an example of a system suitable for implementing embodiments of the present invention.

The system includes a communication device 110 operated by a consumer, a main issuer server 102, a secondary issuer server 103, an data processing server 106 of a payment network, a credential selection server 105, a tokenization service server 108, a point of sale (POS) terminal 103 of a merchant, and a merchant acquirer server 107. The communication device 110 may be a smartphone, tablet, laptop, wearable device, etc.; essentially any data processing device capable of fulfilling the requirements of the invention as detailed below.

The data processing server 106 is communicatively coupled to the main issuer computing device 102, second issuer computing device 103 and merchant acquirer server 107, e.g. via a public network such as the internet, or a private network, virtual private network, or a combination thereof. The data processing server 106 can also communicate with the communication device 110 through a separate out of band communication channel, i.e. via a communication channel that is distinct from the communication channels used between the data processing server 106 and the main issuer computing device 102, second issuer computing device 103 and merchant acquirer server 107. This communication channel can be a 3G, 4G, 5G or WiFi-via-internet channel, for example.

The communication device 110 is capable of communicating via a data connection, such as a WiFi 3G, 4G and/or 5G antennas, and comprises elements capable of communicating with other similarly enabled computing devices (e.g. POS 105), e.g. a near field communication (NFC) antenna, a Bluetooth^{®} antenna and/or a Bluetooth^{®} Low Energy antenna.

In some embodiments, the system includes a passive payment device 101 operated by the consumer and suitable for use in initiating payment transactions in line with EMV^{®} specifications. The payment device 101 may be an integrated circuit card, ICC, or a wearable payment device such as a smart watch or a ring. The payment device 101 is linked to the payment account at the main issuer 102 associated with the consumer. The payment device 101 may have stored thereon payment credentials such as a Primary Account Number (PAN) or encrypted PAN that can be used to identify a main payment account associated with the consumer. This payment account unique identifier is associated with a main issuer and is referred to in the following as a main funding PAN (FPAN) or equivalently a 'first unique identifier' .

In some embodiments, the communication device 110 is used to initiate transactions. The communication device 110 may also capable of performing cryptographic processes to enable secure authentication of a consumer of the mobile communication device, e.g. in line with EMV^{®} specifications. The communication device 110 has stored thereon a payment account unique identifier, e.g. payment account number (PAN) or encrypted or tokenised digital PAN (DPAN), that can be used to identify a payment account associated with the consumer. The DPAN is a tokenized version of the first unique identifier.

The first unique identifier is also associated with a particular payment product. For example, the first unique identifier may be associated with a payment product, such as a credit card, a debit card or a prepaid payment card. Where a tokenized DPAN is associated with the first unique identifier, the DPAN is associated with the same payment account and the same payment product as the first unique identifier.

The consumer may have access to a number of payment credentials (hereafter "secondary unique identifiers" or "PPANs") other than the first unique identifier. These may correspond to different payment accounts, some of which are held at institutions run by issuers (hereafter "secondary issuers") that are not the main issuer 102. They may also correspond to different payment products that are associated with accounts at the main issuer or secondary issuers. For example, where the first unique identifier may correspond to a PAN for a debit card associated with an account at the main issuer, the secondary unique identifiers may include PANs for debit cards associated with accounts consumer has at secondary issuers or to a credit card the consumer has linked to the same account as the first unique identifier, etc. The secondary unique identifier may also be a payment instrument issued on another Payment Network's scheme. The secondary unique identifier may also be payment instruments other than a PAN (e.g. an IBAN, or bank account and sort code combination).

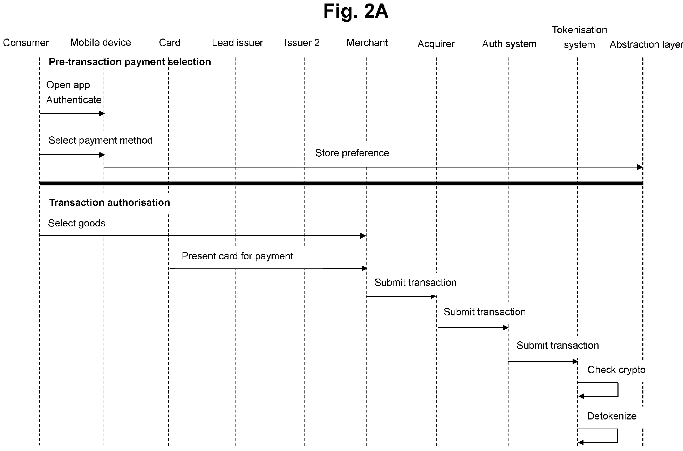

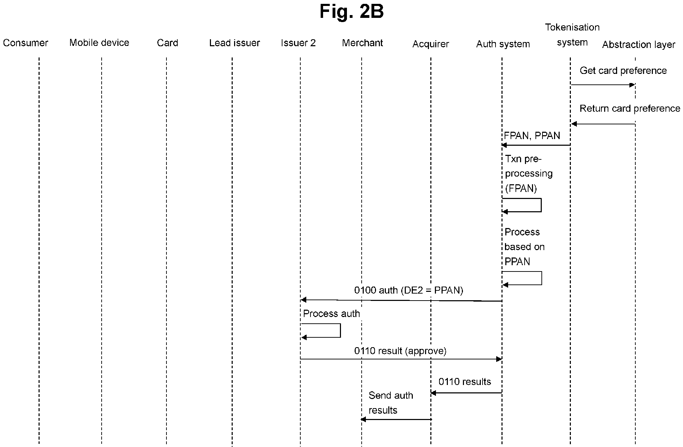

The communication device 110 has stored on its internal memory a software application which a consumer may use to make a selection of payment credentials associated with a secondary issuer 104 to which payments initiated with the payment device 101 should be directed. As described in more detail with respect to Figs 2, 3, and 4, the software application stores a selection of a preferred secondary account on a credential selection database stored on a remote credential selection server 105, which may be accessed by a data processing server 106 during processing of the payment. In effect, the software application allows the consumer to specify a payment account from which funds are to be deducted as part of a transaction, where the payment account is not the same as a payment account that is linked to the payment device 101.

The credential selection database 105 comprises data structures that allow secondary unique identifiers to be dynamically associated with a first unique identifier by a consumer selection.

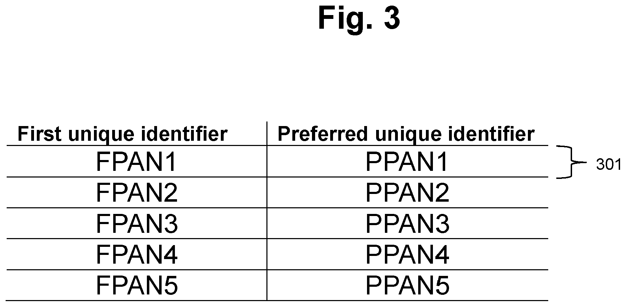

In some examples, the credential selection database 105 comprises a lookup table comprising one mapping record 301 for the first unique identifier, FPAN, in which the mapping record 301 is associated with a preferred unique identifier, PPAN, as described in more detail with respect to Figure 3. The consumer selection for is dynamically updated by modifying the record to replace the PPAN with new consumer selections of preferred unique identifiers.

In other embodiments, the credential selection server 105 may comprise several records associating different PPANs with each FPAN. The data processing server 106 is able to identify a particular PPAN for use in the transaction based on an additional identifier tag included in an authorization request for the transaction.

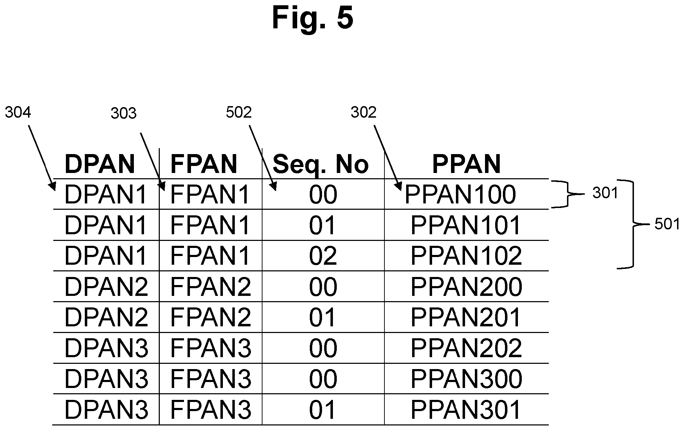

Each PPAN may be associated with an identifier tag in the credential selection server 105. The mobile communication device 110 may include the identifier tag corresponding to a selected PPAN in transaction data that is included in the authorization request message. For example, the mobile communication device 110 may be capable of updating a sequence number that is included in transaction data in authorization requests. The sequence number may be stored within chip data associated with the FPAN or DPAN. The sequence number may serve as the identifier tag discussed above. The credential selection server 105 may store a mapping between each PPAN and a sequence number (see Figure 5). The data processing server 106 can determine which PPAN has been selected based on the sequence number included in the authorization request via a lookup operation performed by the credential selection server 105.

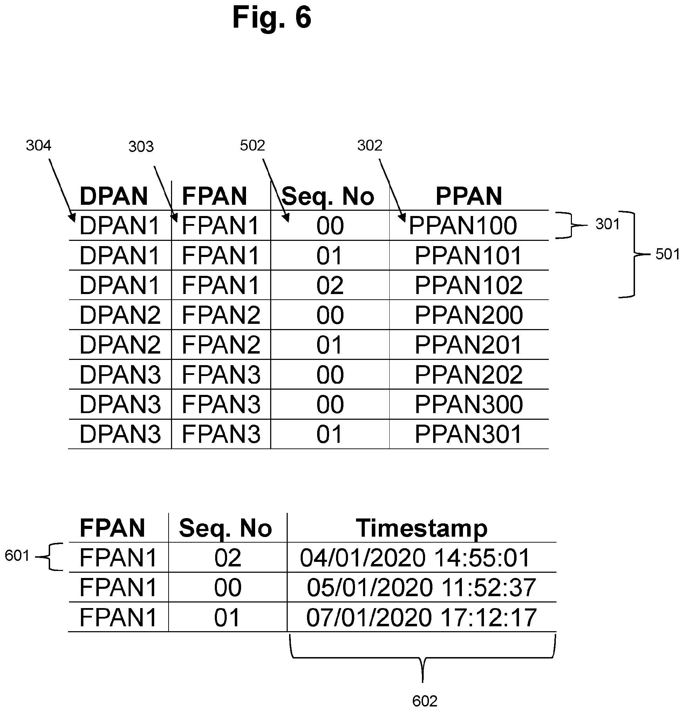

The credential selection server 105 may comprise a list of selections of PPANs with a timestamp indicating the time that the selection was made (see Figure 6). The data processing server 106 can determine the correct PPAN selection for an authorization based on the timestamp included in the authorization request.

An advantage of embodiments of the invention in which an identifier tag is included in authorization requests is that the authorizations may be processed at a different time from the selections without losing the link between the FPAN and PPAN.

Prior to initiating a transaction with a payment device, the consumer registers a selection of a preferred payment credential to be used in preference to the main payment credential using a software application stored on the communication device 110, or via a web browser or any other means for interacting with the credential selection server 105 (e.g. via a call centre). The communication device 110 may have securely stored thereupon a set of secondary unique payment credentials, PPANs, or encrypted PPANs, or references to PPANs, or aliases for PPANs in addition to the main FPAN or an alias thereof. In some cases, to register a selection of a preferred payment credential, the communication device 110 sends an electronic message to the data processing server 106 comprising the PPAN and the FPAN, or aliases thereof. The data processing server 106 may create a new record in the credential selection database 105 in which the selected PPAN is associated with the FPAN. If a record associated with the FPAN already exists, the data processing server 106 may modify the record to associate the FPAN with the PPAN. In some examples, the communication device 110 may communicate directly with the credential selection database 105 to modify or create records.

In some examples, a consumer initially registers PPANs and an FPAN to the credential selection record. Each PPAN and the FPAN are stored in a credential database and each credential is respectively associated with an alias string. When a consumer registers a selection of the PPAN or FPAN, they are identified to the data processing server 106 or the credential selection database 105 using the alias string to prevent unnecessary exchanges of sensitive FPAN and PPAN data. The alias string may be a subset of the digits of the PPAN and/or FPAN, such as a truncated form of the PPAN and/or FPAN (e.g. last four digits), or may be any other arbitrary identifier that only the data processing server and the consumer's device know.

In order to access the software application or to confirm the credential selection, the consumer may be required to submit authentication information. Submitting authentication information may comprise entering a PIN into the keypad of the communication device 110, providing biometric information such as a fingerprint or an image of the consumer's face, providing a password, or other suitable authentication information.

Figures 2A and 2B collectively illustrate the exchange of data between various elements in an embodiment of the present invention in which a transaction is initiated using a tokenized DPAN associated with a communication device 110 and an FPAN, where the FPAN is associated with a payment account and payment product at a main issuer 102. It will be appreciated that Figure 2B is a continuation of the process of Figure 2A.

Subsequent to registering a selection of a preferred payment credential, as described above, the consumer initiates a payment transaction at a POS terminal 103 of a merchant using the first DPAN associated with the first unique identifier and with the communication device 110 in this example.

To initiate a transaction, the POS terminal may provide transaction details to the communication device 110. The transaction details may include any combination of a transaction amount, a merchant name, an Unpredictable Number generated by the POS terminal, a transaction type indicating that the transaction is a contactless transaction made face-to-face at a POS terminal, a transaction date, a timestamp, an identifier tag such as a sequence number, and other transaction details as may be described in EMV^{®} contactless payment specifications. The consumer may bring the communication device 110 into the vicinity of the POS terminal 103, upon which the POS terminal 103 will provide the transaction details to the payment device 101 via a wireless communication channel, e.g. a NFC communication channel.

In some examples, the communication device 110 may generate a cryptogram based on the transaction details provided by the POS terminal 103 and further transaction details provided by communication device 110, such as an application transaction counter (ATC) and the DPAN associated with the communication device 110. The main cryptogram may comprise an encrypted copy of a hash of the transaction details based on a cryptographic tool stored on or derivable by the communication device 110 or another form of cryptogram generated in accordance with EMV^{™} standards, or another suitable cryptogram selected based upon the type of transaction. The communication device 110 provides the cryptogram to the POS terminal 103 via the wireless communication channel. The merchant POS terminal 103 may at this stage perform an offline authentication of the payment card using dynamic static data authentication (SDA), dynamic data authentication (DDA), combined data authentication (CDA),or any other suitable form of offline data authentication.

The merchant POS terminal 103 generates an authorization request message comprising the transaction details and the main cryptogram. The merchant POS 103 sends the authorization request message to a server 107 at an acquirer associated with the merchant. The acquirer in turn generates an authorization request message based on the details provided by the merchant for sending to the payment processing network. The acquirer server 107 sends the authorization request message to a data processing server 106 that forms part of a payment processing network, such as the network operated by Mastercard^{®}.

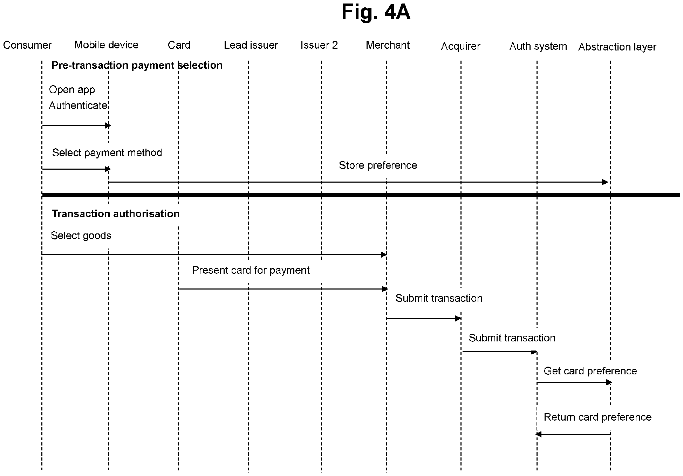

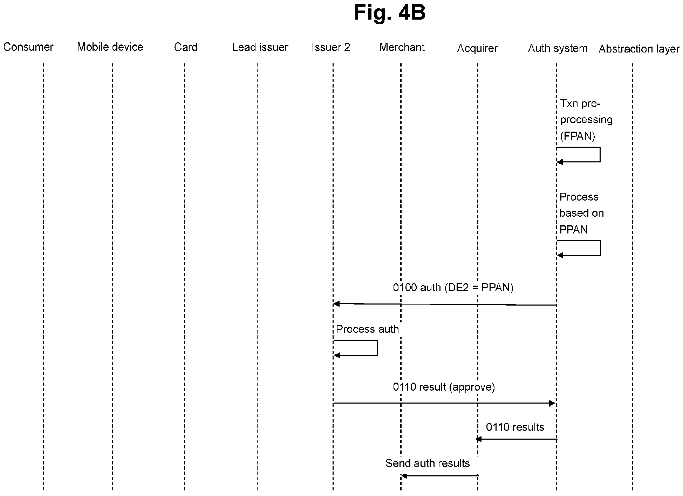

The authorization request message may be an electronic message formatted in accordance with the ISO 8583 standard with the main cryptogram being incorporated in data element 55 (a 'DE55 cryptogram'). The authentication request identifies an account at the main issuer 102 and a payment product type using a DPAN that may be mapped onto the main FPAN by the tokenization service server 108 accessible by the data processing server 106. Alternatively, a transaction can be initiated by a FPAN directly where tokenisation is not being used - this embodiment is discussed below in connection with Figs. 4A and 4B.

The data processing server 106 provides the authorization request message to the tokenization service server 108.

The tokenization service server 108 validates the main cryptogram. In order to validate the main cryptogram, the tokenization service server 108 may generate a further cryptogram based on the transaction details included in the authorization request message and determine that the further cryptogram is identical to the main cryptogram. The tokenization service server 108 may return a response to the data processing server to confirm that the cryptogram has been validated.

The tokenization service server 108 obtains the detokenized FPAN associated with the DPAN. Detokenizing the DPAN may include the steps of extracting the DPAN from the authorization request message and performing a lookup in a tokenization database in order to find a tokenization record in which the DPAN is associated with the FPAN.

The tokenization service server 108 determines that the FPAN is associated with a further preferred unique identifier (or PPAN) stored in the credential selection server 105. In some embodiments, the tokenization service server 108 determines that it should access the credential selection server 105 based on whether the FPAN belongs to a range associated with the use of secondary unique identifiers. In the case where a DPAN is present in the authorization request message, the DPAN may fall within a range that indicates that it is a token rather than a FPAN. This enables the data processing server 106 to distinguish a DPAN from a FPAN, and to determine that it is necessary to call the tokenization service server 108 to detokenize the DPAN and obtain the FPAN. The FPAN obtained from the tokenization service server 108 can then be checked to see whether it belongs to a range associated with the use of secondary unique identifiers.

The authorization request message may comprise an indicator indicating that the message is associated with a number of secondary funding accounts. For example, the tokenization service server 108 may automatically access the credential selection server 105 when processing transactions where the FPAN lies in a specified range, such that the FPAN , or a part of the FPAN, serves as the indicator. The indicator may be referred to as an account range'.

The credential selection database 105 comprises a set of data records, where each data record associates an FPAN with a PPAN indicating a consumer's selected secondary unique identifier, as illustrated in Figure 3. In this embodiment, each FPAN is associated with one mapping record 301. When a new preferred credential for use in preference to the FPAN is selected by the consumer, e.g. using the software application or via a web browser, the mapping record 301 associated with the FPAN is updated to indicate the selected preferred credential.

The tokenization service provider 108 performs a lookup of the data records in the credential selection database based on the FPAN to identify a data record associated with the FPAN. The tokenization service provider 108 extracts the PPAN associated with the identified data record. The tokenization service server 108 then returns the PPAN and FPAN to the data processing server 106 in an electronic message.

In some embodiments, the each FPAN may be associated with several PPANs, as shown in Figures 5 and 6. A further tag included in the authorization message, such as a chip generated sequence number or a timestamp, may be used by the tokenization service provider 108 to identify a selection of a PPAN associated with a particular authorization request.

The data processing server 106 performs pre-processing based on the FPAN. Such services may include looking up what on behalf services an issuer may wish to perform (such as fraud monitoring), as well as looking up details of the issuer and how and where to route the transaction to, what type of product is being used, and making sure suitable data is available for reporting, debugging and billing.

The data processing server 106 performs processing of the transaction based on the PPAN. This includes determining the product associated with the PPAN and identifying the issuer associated with the PPAN.

The data processing server 106 generates an updated authorization request message for sending to the issuer 104 associated with the PPAN, the updated authorization request message including the PPAN and the transaction details included in the original authorization request.

When the original authorisation message contains dynamic data and/or cryptographic data, and/or chip data, the data processing server 106 or the tokenization service server 108 may validate the dynamic/cryptographic/chip data. In the event of successful validation the updated authorization request message may further comprise a flag indicating to the issuer 104 that the cryptogram of the authorization request has been validated either by the data processing server 106 or the tokenization service server 108. This is particularly advantageous when the issuer 104 associated with the PPAN is a different issuer to the issuer 102 associated with the DPAN and FPAN, as the secondary issuer 104 associated with the PPAN will not generally have access to the cryptographic keys associated with the payment device 101 used to initiate the transaction.

The updated authorization request message comprising the transaction details and the PPAN is sent to the secondary issuer 104 associated with the PPAN for processing. Sending the updated authorization request message may comprise directly sending an electronic message to a server of the secondary issuer 104 associated with the PPAN, or it may include sending the authorization request to a further party for forwarding to a server of the secondary issuer 104 associated with the PPAN. For example, if the secondary issuer 104 associated with the PPAN belongs to a payment network operated by a different payment network provider than the main issuer 102, the data processing server 106 may send the authorization request to a separate data processing server operated by the different payment network provider for forwarding to the secondary issuer 104.

Figures 4A and 4B illustrate the exchange of data between various elements during an embodiment of the present invention in which a transaction is initiated using payment device 101 and a non-tokenized FPAN associated with a payment account and payment product at a main issuer 102. The payment device 101 may be a passive payment device 101 or an active payment device, such as the communication device 110. It will be appreciated that Figure 4B is a continuation of the process of Figure 4A.

Subsequent to registering a selection of a preferred payment credential, the consumer initiates a payment transaction at a POS terminal 103 of a merchant using the first unique identifier, which is an FPAN associated with a payment account at the main issuer and with a payment product.

To initiate a transaction, the POS terminal may provide transaction details to the payment device 101. The transaction details may include any combination of a transaction amount, a merchant name, an Unpredictable Number generated by the POS terminal, a transaction type indicating that the transaction is a contactless transaction made face-to-face at a POS terminal, a transaction date, a timestamp, an identifier tag such as a sequence number, and other transaction details as may be described in EMV^{®} contactless payment specifications. The consumer may bring the payment device 101 into the vicinity of the POS terminal 103, upon which the POS terminal 103 will provide the transaction details to the payment device 101 via a wireless communication channel, e.g. a NFC communication channel.

The communication device 110 may generate a cryptogram based on the transaction details provided by the POS terminal 103 and further transaction details provided by communication device 110, such as an application transaction counter (ATC) and the DPAN associated with the communication device 110. The main cryptogram may comprise an encrypted copy of a hash of the transaction details based on a cryptographic tool stored on or derivable by the communication device 110 or another form of cryptogram generated in accordance with EMV^{™} standards, or another suitable cryptogram selected based upon the type of transaction. The communication device 110 provides the cryptogram to the POS terminal 103 via the wireless communication channel. The merchant POS terminal 103 may at this stage perform an offline authentication of the payment card using SDA, CDA, DDA, or any other suitable form of offline data authentication.

The merchant POS terminal 103 generates an authorization request comprising the transaction details and the main cryptogram.

The merchant POS 103 sends the authorization request message to a server 107 at an acquirer associated with the merchant. The acquirer in turn generates an authorization request message based on the details provided by the merchant for sending to the payment processing network. The acquirer server 107 sends the authorization request message to a data processing server 106 that forms part of a payment processing network, such as the network operated by Mastercard^{®}.

The authorization request message may be an electronic message formatted in accordance with the ISO 8583 standard with the main cryptogram being incorporated in data element 55 (a 'DE55 cryptogram'). The authentication request identifies an account at the main issuer 102 and a payment product type using the main FPAN or an alias thereof.

The data processing server 106 validates the main cryptogram. In order to validate the cryptogram, the data processing server 106 may generate a further cryptogram based on the transaction details included in the authorization request message and determine that the further cryptogram is identical to the main cryptogram.

The data processing server 106 accesses the credential selection server 105 in order to determine which PPAN that the consumer has selected using the software application based on the FPAN.

In some examples, the data processing server 106 determines that it should access the credential selection server 105 based on whether the FPAN in the authorization request message belongs to a range associated with the use of secondary issuer accounts. In some examples, the authorization request message comprises a tag indicating that the PAN is associated with a number of secondary funding accounts.

The credential selection database 105 comprises a set of data records, where each mapping record 301 associates an FPAN with a PPAN indicating a consumer's selected secondary unique identifier, as illustrated in Figure 3.

The data processing server 106 performs a lookup of the data records in the credential selection database based on the FPAN to identify a record associated with the FPAN. The data processing server 106 extracts the PPAN associated with the identified record associated with the FPAN. Where this step is performed by the tokenization service server 108, the PPAN and FPAN are returned to the data processing server 106 in an electronic message.

In some embodiments, the each FPAN may be associated with several PPANs, as shown in Figures 5 and 6. A further tag included in the authorization message, such as a chip generated sequence number or a timestamp, may be used by the tokenization service provider 108 to identify a selection of a PPAN associated with a particular authorization request.

The data processing server 106 performs pre-processing based on the FPAN. Such services may include looking up what on behalf services an issuer may wish to perform (such as fraud monitoring), as well as looking up details of the issuer and how and where to route the transaction to, what type of product is being used, and making sure suitable data is available for reporting, debugging and billing.

The data processing server 106 performs processing of the transaction based on the PPAN. This includes determining the product associated with the PPAN and identifying the issuer associated with the PPAN.

The data processing server 106 generates an updated authorization request message for sending to the issuer 104 associated with the PPAN, the updated authorization request message including the PPAN and the transaction details included in the original authorization request. The updated authorization request message may further comprise a flag indicating to the issuer 104 that the cryptogram of the authorization request has been verified either by the data processing server 106 or the tokenization service server 108. This is particularly advantageous when the issuer 104 associated with the PPAN is a different issuer to the issuer 102 associated with the FPAN, as the issuer 104 associated with the PPAN will not generally have access to the cryptographic tools associated with the payment device 101 used to initiate the transaction.

The updated authorization request message comprising the transaction details and the PPAN is sent to the issuer 104 associated with the PPAN for processing. Sending the updated authorization request message may comprise directly sending an electronic message to a server of the secondary issuer 104 associated with the PPAN, or it may include sending the authorization request to a further party for forwarding to a server of the secondary issuer 104 associated with the PPAN. For example, if the secondary issuer 104 associated with the PPAN belongs to a payment network operated by a different payment network provider than the main issuer 102, the data processing server 106 may send the authorization request to a separate data processing server operated by the different payment network provider for forwarding to the secondary issuer 104.

Figure 5 illustrates a data structure of the credential selection database 105 in an embodiment of the invention.

In this embodiment, the credential selection database 105 may store a set 501 of mapping records 301 associated with each FPAN and DPAN. When a consumer links a new payment credential to the main FPAN, a new mapping record 301 is created in the credential selection database 105. To register a link between an FPAN and a PPAN, the consumer may provide details of a new PPAN to the credential selection server 105 via a mobile device using the software application or via a website provided by the main issuer 102. The details of the new PPAN may comprise the PPAN itself or an encrypted version of the PPAN.

In addition to an FPAN, a DPAN and a PPAN, each mapping record of the set of mapping records 501 comprises a tag. Each mapping record 301 in the set of records 501 associated with a given FPAN/DPAN is indexed by a unique tag. In the illustrated example the tag is a sequence number 502, but this is purely exemplary and any other unique identifier can alternatively be used. Thus, each DPAN / FPAN may be associated with several mapping records 501, while each PPAN is associated with a single mapping record 301. Within each set of records 501 that are associated with a given DPAN and FPAN, each tag 502 is associated with a single mapping record 301. Thus, the combination of a DPAN or FPAN and a tag 502 uniquely identifies a PPAN.

A consumer selects a preferred payment credential 302 in the credential selection database 105 using the software application or website provided by the main issuer 102. The data processing server 106 extracts the tag 502 from the mapping record 301 associated with the preferred payment credential 302. The data processing server 106 sends an instruction via a data connection to a payment device 101 of the consumer to update a tag held on the device to the extracted tag 502 for inclusion in authorization request messages associated with the FPAN or DPAN.

As mentioned above, the tag may be a sequence number and/or other chip data element that is generated by a payment device chip when generating transaction data during initiation of a transaction. In this case, the payment device has the capability to update the chip data element, e.g. sequence number, stored on an integrated circuit chip, secure element, or trusted execution environment as and when needed, e.g. in response to a consumer selection of a preferred payment credential 302.

Subsequent to updating the tag to correspond to a selected mapping record associated with a PPAN, a transaction is initiated using the payment device. The payment device generates transaction data including the tag and passes the transaction data to a merchant terminal. The merchant terminal generates an authorization request including the transaction data and sends the authorization request to the acquirer. The acquirer generates an authorization request message based on the transaction data and sends the authorization request message to the data processing server 106.

The authorization request message received from an acquirer 107 in relation to a transaction initiated with the payment device will include transaction details comprising the tag, and the DPAN or the FPAN. From this information, it is possible to uniquely identify a PPAN in the credential selection database for use in the updated authorization request message. For example, a search may be performed of the credential selection database to identify a set of mapping records associated with the DPAN and FPAN. The data processing server 106 may then search the set of mapping records to identify a unique record associated with the tag. The data processing server 106 may then extract the PPAN associated with the identified record. The data processing server 106 can then process the transaction using the PPAN instead of the FPAN, where the PPAN is that extracted from the identified record.

In the above case, the selected PPAN is identified from information included in the transaction authorization request. An advantage of methods in which the selected PPAN is identified from data included in the authorization request is that the authorization request may be processed after the authorization itself. Where a consumer registers a further selection of a different PPAN subsequent to the initial selection but before the transaction is processed, the original selection may be determined from the tag included in the authorization request message.

Figure 6 illustrates a data structure of the credential selection database 105 in another embodiment of the invention. This data structure is particularly advantageous for use in examples where the payment device 101 is not able to update its sequence number, e.g. where payment device 101 is a passive payment device.

In this example, the tag provided in the authorization request that is used to identify a PPAN is a timestamp rather than a sequence number or other chip generated tag. Upon a consumer selecting a PPAN for use in preference to an FPAN, the data processing server stores a timestamp recording the time the selection was made in a record in the credential selection server 105. Upon subsequently receiving an authorization request using the FPAN, the data processing server 106 is able to identify the PPAN corresponding to the consumer's selection based on the timestamp in the authorization request message and the timestamp in the record in the credential selection server. The example below describes one particular way in which this process can be carried out.

In addition to the data structure of the example described in Figure 5, the credential selection database 105 further comprises data entries indicating several PPAN selections that have been made by the consumer at different times. Each time the consumer registers a selection of a preferred payment credential using the software application, the data processing server 106 creates a new selection record 601 in the credential selection database 105. Each selection record 601 comprises data indicating an FPAN, a tag associated with the PPAN (in this exemplary case, the tag is a sequence number), and a timestamp 602 indicating the time and date that the selection was made.

On receiving an authorization request message relating to a transaction initiated using the FPAN, the data processing server 106 identifies a selection record 601 associated with the authorization request message based on a timestamp in the authorization request message. The data processing server 106 may identify the selection record 601 with a timestamp 602 closet in proximity to the timestamp of the authorization request message. Alternatively, the data processing server 106 may identify the selection record with the latest timestamp 602 occurring before the timestamp indicated in the authorization request message.

The data processing server 106 extracts the sequence number 502 from the identified selection record 601. The data processing server 106 identifies the mapping record 301 associated with the FPAN and the extracted sequence number. The data processing server 106 extracts the PPAN from the identified mapping record for use in the updated authorization request message.

The above method allows for instances where the consumer has selected PPAN01, performed a transaction, but the merchant has saved it to authorise later. The consumer then changes to PPAN02 and performs a different transaction. When the merchant eventually submits the first transaction, this method ensures that the correct PPAN selected at the time of purchase is used for processing. Examples of this may include purchases onboard an aircraft or cruise ship where a data connection may not be available, or a purchase at a large retailer at a particularly busy period, where they prioritise getting customers through their checkouts over a definitive approval; another example would be a merchant that wants to continue processing, even if their connection to their issuer is temporarily unavailable.

An advantage of the data structure used in Figure 6 is that is can be used to process transactions in which a device generated tag, such as a sequence number, is unable to be generated or transmitted. Not all devices may be capable of updating a sequence number for inclusion in an authorization message on device. In some examples, the data processing server 106 identifies a mapping record based on a sequence number provided by the consumer device when the consumer device is able to update the sequence number for inclusion in an authorization request, while identifying the mapping record based on a timestamp if the consumer device is not able to update the sequence number. This advantageously provides flexibility in user experience whilst also ensuring compatibility with a wide variety of consumer devices.

In some examples, the data processing server 106 determines, on receiving an authorization request message, whether a sequence number in the authorization request message is set to a default value. If the sequence number is set to a default value, the data processing server 106 determines that the sequence number has not been updated on the device and identifies a selection record 601 in the credential selection server 105 based on a timestamp in the selection record 601 and a timestamp in the authorization request message, as described above. The sequence number from the selection record 601 is used to identify a mapping record 301 and a PPAN in the credential selection database 105. If the sequence number in the authorization request message is not set to a default value, the data processing server 106 determines that the sequence number has been updated by the device and the sequence number in the authorization request message is used to identify a mapping record 301 and PPAN in the credential selection database 105.

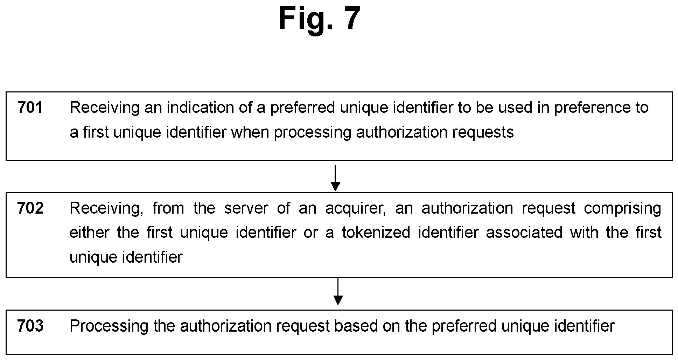

Figure 7 shows a flow diagram illustrating steps performed by a system in some embodiments of the invention. The system may comprise the data selection server 106, or the tokenization service server 108, or the credential selection database 105, or a combination of these elements.

In Step 701, the system receives an indication of a preferred unique identifier to be used in preference to a first unique identifier when processing an authorization request. The preferred unique identifier may be a PPAN and the first unique identifier may be an FPAN.

The indication may take the form of an electronic message that is received from a communication device, where the electronic message comprising an FPAN and a PPAN and indicates that the PPAN should be used when processing transactions initiated with the FPAN.

The indication may alternatively take the form of a tag that is included with an authorisation request message, where the tag includes an identifier that is usable to identify the preferred unique identifier for use in preference to the first unique identifier. The tag may be a sequence number associated with a payment credential. In some cases the data held by the tag is written during the transaction itself, e.g. based on a consumer selection made as part of the transaction process itself, to enable real-time selection of a PPAN, i.e. during an ongoing transaction. Alternatively, data held by the tag may be set prior to initiation of the transaction. In some cases, subsequent transactions using the first unique identifier will be processed as though they were initiated with the preferred unique identifier corresponding to the first unique identifier until a further selection is made by the consumer by transmitting another indication, e.g. another electronic message specifying a FPAN and PPAN. That is, only one preferred unique identifier is 'live' at any given time for a particular first unique identifier. Alternatively, a time at which the indication is received by the system may be logged such that all transactions occurring after the logged time are funded using the preferred unique identifier identified in the indication. Referring briefly to Figure 6, all transactions occurring between 04/01/2020 14:55:01 and 05/01/2020 11:52:37 making use of FPAN1 would be funded by PPAN102, for example.

In Step 702, the system receives an authorization request comprising either the first unique identifier or a tokenized identifier associated with the first unique identifier.

In Step 703, the data processing server processes the authorization request based on the preferred unique identifier. This may include generating a further authorization request message comprising the relevant preferred unique identifier in place of the first unique identifier and forwarding the authorization request message to the issuer associate dwiht the preferred unique identifier.

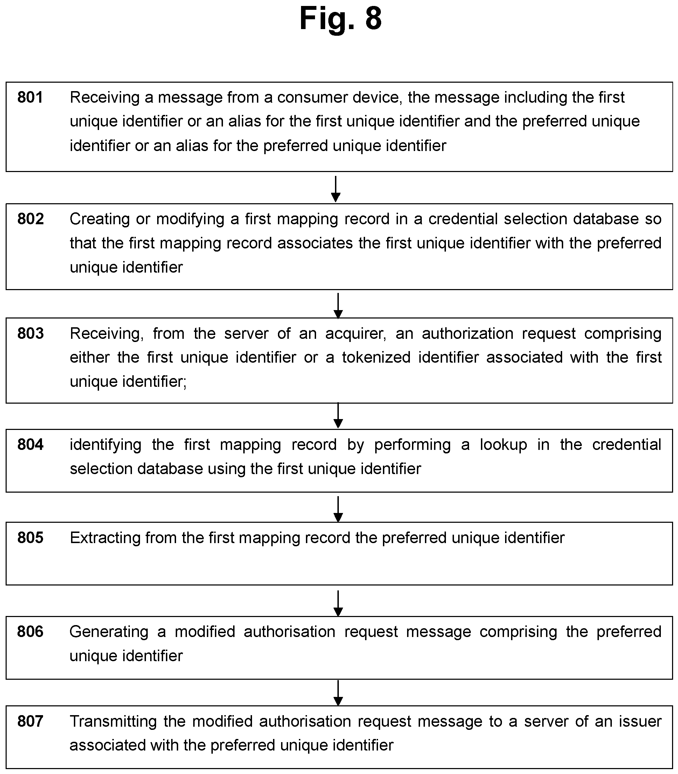

Figure 8 shows a flow diagram illustrating steps performed by a system in further embodiments of the invention

In Step 801, the system receives a message from a consumer device, the message including the first unique identifier or an alias for the first unique identifier and the preferred unique identifier or an alias for the preferred unique identifier.

In the embodiments described above, the message is generated by a software application and sent from a communication device 110 of a consumer. The message indicates that the consumer intends to create an association between the first unique identifier and the preferred unique identifier. The first unique identifier is an FPAN associated with a main issuer and a particular payment product. The preferred unique identifier may be a PAN that is associated with a different payment product and/or a different issuer to the FPAN.

In Step 802, the system creates or modifies a first mapping record in a credential selection database 105 so that the first mapping record associates the first unique identifier with the preferred unique identifier.

Step 802 may comprise creating a new mapping record comprising both the FPAN and the PPAN. The new mapping record may comprise an associated tag such as a sequence number or timestamp, as described with reference to Figure 5 and Figure 6. Creating or modifying a first record may comprise modifying an existing mapping record such that a previously stored identifier that was linked to the FPAN is deleted and replaced with the selected PPAN. Creating or modifying a first record may comprise identifying an existing mapping record associated with the PPAN and creating a new selection record indicating the FPAN, the sequence number associated with the existing mapping record, and a timestamp indicating the time and date that the selection was made.

In Step 803, the system receives, from a server of an acquirer, an authorisation request message comprising an authorization request comprising either the first unique identifier or a tokenized identifier associated with the first unique identifier.

The authorization request message is a message generated by a merchant POS terminal 103 as a result of an interaction with a payment device when initiating a transaction. The authorization request message may be an electronic message formatted in accordance with the ISO 8583 standard. The payment device may be the communication device having stored thereon the first unique identifier, FPAN, or a DPAN associated with the FPAN. Alternatively, the payment device may be a passive payment device having the FPAN or DPAN stored thereon. During the initiation of a transaction, the FPAN or the DPAN is passed to the merchant POS terminal 103 for inclusion in the authorization request message.

In Step 804, the system identifies the first mapping record by performing a lookup in the credential selection database using the first unique identifier.

Identifying the first record may comprise identifying a unique record associated with the first unique identifier. Alternatively, identifying the first record may comprise identifying a unique record based on the first unique identifier and another identifier, such as a sequence number, as described with respect to Figs. 5 and 6. The sequence number may be included in the authorization request message received from the acquirer. Alternatively, the sequence number may be determined from a selection record associated with a timestamp based on a timestamp included in the authorization request message.

The first unique identifier may be received in the authorization request message received from the acquirer. The authorization request message received from the acquirer may comprise a DPAN, which is detokenized to obtain the first unique identifier.

In Step 805 , the system extracts the preferred unique identifier from the first record.

As each record comprises only one preferred unique identifier, the system extracts the data stored in a data element reserved for the preferred unique identifier.

In Step 806, the system generates a modified authorisation request message comprising the preferred unique identifier.

The modified authorization message includes the preferred unique identifier in the data element previously indicating the first unique identifier.

In Step 807 , the system transmits the modified authorisation request message to a server of an issuer associated with the preferred unique identifier.

If the issuer associated with the preferred unique identifier belongs to a different payment network to the main issuer, transmitting the modified authorisation request message may comprise sending the modified authorisation request message to a second data processing server for forwarding to the server of the issuer associated with the preferred unique identifier.

The invention thus provides methods and systems that are capable of enabling a consumer to select, via a communication device, payment credentials for funding a transaction that are distinct from payment credentials details provided by a payment device to a POS terminal on initiation of a transaction. This provides improved flexibility to the consumer without compromising consumer experience.

Having described the invention in the context of card present transactions initiated at a merchant POS terminal, it will be appreciated by the skilled person that the invention can also be put into practice in connection with ecommerce / card not present transactions in which a payment credential is provided to a merchant portal, e.g. via a web browser installed on a data processing device, e.g. communication device 110. In this case, the invention functions in the same manner, it is just that the transaction is a card not present / ecommerce transaction that originates from a merchant portal or the like rather than a merchant POS terminal. Such scenarios are therefore also embodiments of the invention.

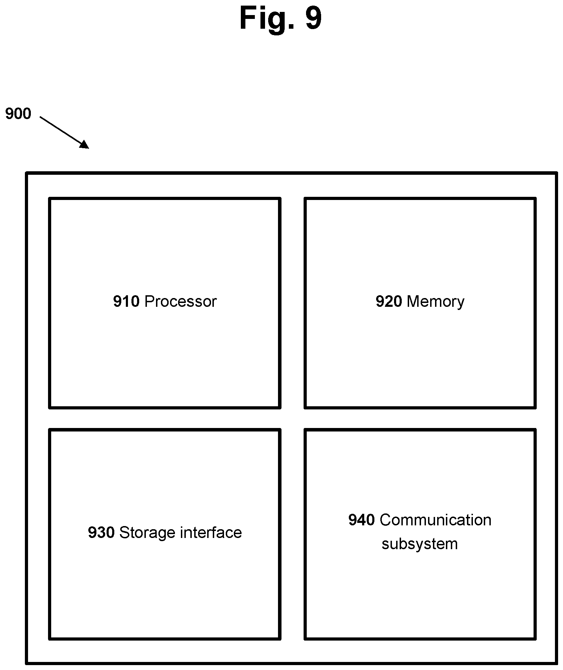

It will be apparent to a person skilled in the art that the methods described herein are all suitable for implementation by a data processing device. By way of example, Fig. 9 shows in schematic form a data processing device 900 that is suitable for performing the functions of the payment network server or communication device described above.

Data processing device 900 includes a processor 910 for executing instructions. Instructions may be stored in a memory 920, for example. Processor 910 may include one or more processing units (e.g., in a multi-core configuration) for executing instructions. The instructions may be executed within a variety of different operating systems on the data processing device 900, such as UNIX, LINUX, Microsoft Windows^{®}, etc.

Processor 910 is operatively coupled to a communication subsystem 990 such that data processing device 900 is capable of communicating with a remote device. Processor 910 may also be operatively coupled to a storage device such as storage medium via storage interface 930. The storage device is any computer-operated hardware suitable for storing and/or retrieving data. In some cases, e.g. a remotely located storage medium, communication subsystem 990 may perform the function of storage interface 930 such that these two entities are combined.

The storage medium can be integrated in data processing device 900, or it can be external to data processing device 900 and located remotely. For example, data processing device 900 may include one or more hard disk drives as a storage device. Alternatively, where the storage device is external to data processing device 900, it can comprise multiple storage units such as hard disks or solid state disks in a redundant array of inexpensive disks (RAID) configuration. The storage device may include a storage area network (SAN) and/or a network attached storage (NAS) system.

Processor 910 can be operatively coupled to the storage device via the storage interface 930. Storage interface 930 is any component capable of providing processor 910 with access to the storage device. Storage interface 930 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 910 with access to the storage device.

Memory 920 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method for processing a transaction, the method performed by a data processing system, the method comprising:
receiving an indication of a preferred unique identifier to be used in preference to a first unique identifier when processing an authorization request;
receiving, from a server of an acquirer, an authorization request comprising either the first unique identifier or a tokenized identifier associated with the first unique identifier; and
processing the authorization request based on the preferred unique identifier.

2. The computer-implemented method of claim 1, wherein receiving an indication of a preferred unique identifier comprises:
receiving an electronic message from a consumer device, the message including either the first unique identifier or an alias for the first unique identifier and either the preferred unique identifier or an alias for the preferred unique identifier; and
creating or modifying a first mapping record in a credential selection database so that the first mapping record associates the first unique identifier with the preferred unique identifier;
and wherein processing the authorization request based on the preferred unique identifier comprises:
identifying the first mapping record by performing a lookup in the credential selection database using the first unique identifier;
extracting from the first mapping record the preferred unique identifier;
generating a modified authorisation request message comprising the preferred unique identifier; and
transmitting the modified authorisation request message to a server of an issuer associated with the preferred unique identifier.

3. The computer-implemented method of claim 2, wherein modifying the first mapping record in the credential selection database comprises replacing a previously stored unique identifier with the preferred unique identifier.

4. The computer-implemented method of any preceding claim, wherein the indication of the preferred unique identifier is included in the authorization request.

5. The computer-implemented method of any preceding claim, further comprising:
identifying, based on the indication of the preferred unique identifier, a preferred mapping record in a credential selection database, wherein the credential selection database comprises a set of mapping records, wherein each mapping record of the set of mapping records comprises a mapping between the first unique identifier and a respective identifier, and wherein the preferred mapping record comprises a mapping between the first unique identifier and the preferred unique identifier.

6. The computer-implemented method of claim 5, wherein the indication of the preferred unique identifier is a tag included in the authorization request, and wherein identifying the preferred mapping record in the credential selection database comprises:
performing a lookup in the credential selection database based on data held in the tag.

7. The computer-implemented method of claim 6, the method further comprising:
receiving a preference selection from a consumer device indicating that the preferred unique identifier associated with the preferred mapping record is selected for use in transactions initiated using the first unique identifier; and
sending an instruction to the consumer device to update chip data stored on the consumer device such that the chip data includes the data held in the tag.

8. The computer-implemented method of any preceding claim, wherein the indication of the preferred unique identifier comprises a time stamp.

9. The computer-implemented method of any preceding claim, further comprising:
receiving cryptographic data in the authorisation request, the cryptographic data corresponding to a payment card used in the transaction;
validating the cryptographic data; and
upon validating the cryptographic data, including in the modified authorisation request message a flag indicating that validation has been performed and the results of the validation.

10. The computer-implemented method of any preceding claim, further comprising:
receiving cryptographic data in the authorisation request message, the cryptographic data corresponding to a payment card used in the transaction;
validating the cryptographic data;
in the event of successful validation, setting a transaction type value of the modified transaction request message equal to a transaction type that does not require cryptographic data.

11. The computer-implemented method of any preceding claim, wherein processing the authorization request based on the preferred unique identifier comprises any one of:
replacing the first unique identifier in the authorisation request with the preferred unique identifier;
appending the preferred unique identifier to the authorisation request; and
generating a new authorisation request, inserting the preferred unique identifier into the new authorisation request to form a modified authorisation request and processing the modified authorisation request in place of the authorisation request.

12. The computer-implemented method of any preceding claim, wherein the tokenized identifier is a digital PAN, DPAN, and wherein the method further comprises:
detokenizing the DPAN to obtain the first unique identifier.

13. The computer-implemented method of any preceding claim, wherein the preferred unique identifier is a payment credential associated with a different product, issuer, and/or payment account to the first unique identifier.

14. One or more processors in a payment network configured to perform the method of any preceding claim.

15. A computer-readable medium having instructions stored thereon which, when executed by one or more payment network processors, cause the one or more processors to perform the method of any one of claims 1 to 13.
